# EUROPEAN PATENT SPECIFICATION

(11) **EP 1 607 650 B1**
(45) Date of publication and mention of the grant of the patent: **21.01.2009**
(21) Application number: 05013007.9
(22) Date of filing: 16.06.2005
(51) Int. Cl.: F16D 48/06

(54) **Control device for vehicle with auto clutch, control method thereof, and vehicle**
Steuerungsvorrichtung für Kraftfahrzeuge mit automatischer Kupplung, Steuerungsverfahren und Kraftfahrzeug
Procédé et dispositif de commande de véhicule automobile avec embrayage automatique, et véhicule

(30) Priority: 16.06.2004 JP 2004177956
(43) Date of publication of application: 21.12.2005
(73) Proprietor: Hitachi, Ltd., Tokyo 100-8280 (JP)
(72) Inventor: Ochi, Tatsuya, Naka-gun Ibaraki 319-1105 (JP); Minowa, Toshimichi, Mito-shi Ibaraki 311-1115 (JP); Okada, Takashi, Hitachi-shi Ibaraki 316-0025 (JP); Sakamoto, Hiroshi, Hitachi-shi Ibaraki 317-0077 (JP); Ozaki, Naoyuki, Hitachinaka-shi Ibaraki 312-0002 (JP)
(74) Representative: Beetz & Partner

(56) References cited:
- WO-A-03/058093
- WO-A-20/04067312
- FR-A- 2 838 489
- US-A- 6 033 342
- US-A- 6 039 673
- US-A1- 2004 061 603
- US-A1- 2004 067 818
- US-B1- 6 679 810

## Description

### BACKGROUND OF THE INVENTION

The present invention relates to a control device for a vehicle with an auto clutch, a control method and a vehicle, particularly to a control device for a vehicle with an auto clutch suitable to prevent the burnout due to overheating of the clutch, a control method thereof, and the vehicle.

Recently, the transmission where the gear type transmission is automated from the viewpoint of favorable mileage for an automobile is widespread. This transmission is an automatic transmission which comprises a gear train which can be freely rotated on the axis and a synchromesh, in which the synchromesh is switched by the actuator to carry out the gear shift. The gear type transmission is provided with at least one light and highly effective auto clutch in a driving system between an engine and the transmission to control a driving force transferred from the engine to the transmission, and control the engaging force of the clutch by the actuator automatically.

This auto clutch transfers power by pressing the friction board. The auto clutch is made to be a state of half engagement of the clutch (state of slipping) from its release state at the start operation or shift operation to transfer power of the vehicle smoothly. Therefore, the clutch temperature rises because frictional heat by the state of half engagement of a clutch occurs voluminously, and the clutch might be damaged by burnout.

FR 2 838 489 A1 relates to an apparatus and a method for surveillance of an automated clutch, particularly of the temperature of the clutch during a hill-holding function, to thereby avoid operational disturbances of the clutch. FR 2 838 489 A1 does not teach to undertake measures for preventing a vehicle from uncontrolled rolling, whose clutch was opened by such an apparatus and method for surveillance of an automated clutch.

US 6 039 673 A1 relates to a control system for automatic transmission and proposes to solve the problem of transmitting engine vibrations to a driver's seat during a hill-hold function by providing, amongst others, a clutch disengaging system which performs a neutral control wherein the clutch is almost disengaged and a brake engaging system which performs the hill-hold control by engaging the brake when the clutch is almost disengaged. In doing so, the technical teaching of this prior art document has the disadvantage of solely providing a brake engaging system for preventing a roll back of a vehicle provided with a automated clutch disengaging system. The problem of changing a speed without releasing the clutch is not mentioned.

In Japanese Patent Application Laid-Open No. 2002-115582, the clutch is protected from being damaged due to overheating by completely releasing the clutch when the clutch temperature exceeds the limit value and intercepting the power transfer.

### BRIEF SUMMARY OF INVENTION

However, the power transfer to the wheel is exceptionally intercepted against the driving demand of driver in the method disclosed in Japanese Patent Laid-Open No. 2002-115582. Therefore, a driver is forced brake operation and might feel uneasiness because the vehicle may move backward by the releasing operation of the clutch at the slope start in which the frictional heat of the clutch especially increases.

An object of the present invention is to provide a control device for a vehicle with an auto clutch which is able to control unexpected roll back of the vehicle caused by the security function when an abnormality of a clutch is detected, a control method thereof, and a vehicle, wherein a speed is changeable without disengaging the clutch.
(1) To achieve the above-mentioned object, the present invention provides a control device for a vehicle with an auto clutch which can automatically operate engaging force of the clutch which controls the driving force transferred from an engine to a transmission by an actuator, comprising an abnormal detection means which detects abnormality of said clutch, a clutch release means which releases said clutch when abnormality of said clutch is detected by this abnormal detection means, a clutch release state judgment means which judges the release state of said clutch by said clutch release means, a restraint force command generation means which generates a command to generate the restraint force to restrain the roll back of said vehicle when judged that said clutch is released by said clutch release state judgment means, and/or a restraint force generation means which generates the restraint force to restrain the roll back of said vehicle based on the command from said restraint force command generation means in a control device for a vehicle with an auto clutch which can automatically operate engaging force of the clutch which controls the driving force transferred from an engine to a transmission by an actuator. The unexpected roll back of the vehicle caused by the security function when the abnormality of a clutch is detected is controlled according to the above configuration.
(2) Said transmission being a gear type transmission, and said restraint force generation means being a torque transfer means provided between an input shaft and an output shaft of said gear type transmission in the above-mentioned configuration (1).
(3) Preferably, said abnormal detection means can be a means to detect the abnormality of temperature of said clutch when the temperature of said clutch becomes more than the first predetermined temperature in the above-mentioned configuration (1).

### BRIEF DESCRIPTION OF DRAWINGS

FIG. 1 is a block diagram showing the entire configuration of a vehicle with an auto clutch not belonging to the present invention.
FIG. 2 is a view showing the outline configuration of a transmission used for the vehicle with an auto clutch according to the first embodiment of the present invention.
FIG. 3 is a view showing the configuration of a clutch used for the vehicle with an auto clutch according to the first embodiment of the present invention.
FIG. 4 is a block diagram showing an electric control system of a control device for the vehicle with an auto clutch according to the first embodiment of the present invention.
FIG. 5 is a flow chart showing the content of the control of the control device for the vehicle with an auto clutch according to the first embodiment of the present invention.
FIG. 6 is a timing chart showing the control operation of the control device for the vehicle with an auto clutch according to the first embodiment of the present invention.
FIG 7 is a block diagram showing the entire configuration of a vehicle with an auto clutch according to a second embodiment of the present invention.
FIG. 8 is a view showing the outline configuration of a transmission used for the vehicle with an auto clutch according to the second embodiment of the present invention.
FIG. 9 is a block diagram showing the entire configuration of a vehicle with an auto clutch according to a second example, not covered by the presently claimed invention.
FIG. 10 is a flow chart showing the operation of a control device for the vehicle with an auto clutch according to the second example.
FIG. 11 is a timing chart illustrating the operation of the control device for the vehicle with an auto clutch according to the second example.
FIG. 12 is a timing chart showing the control operation of the control device for the vehicle with an auto clutch according to the second example.
FIG. 13 is a block diagram showing the entire configuration of a vehicle with an auto clutch according to a third example, not covered by the presently claimed invention.
FIG. 14 is an explanatory drawing showing the shift map in the vehicle with an auto clutch according to the third example.
FIG 15 is a block diagram showing the entire configuration of a vehicle with an auto clutch according to a fourth example, not covered by the presently claimed invention.
FIG. 16 is an explanatory drawing showing the shift map in the vehicle with an auto clutch according to the fourth example.
FIG 17 is a block diagram showing the entire configuration of the vehicle with an auto clutch according to a fifth example.

### DETAILED DESCRIPTION OF THE PREFERRED EMBODIMENTS

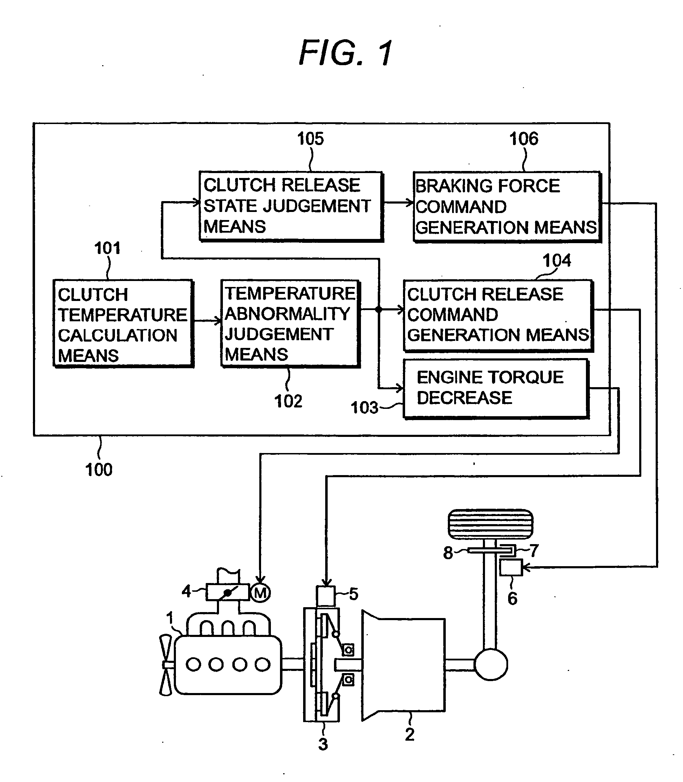

Hereafter, the configuration and the operation of the control device for the vehicle with an auto clutch not belonging to the present invention is explained using FIG. 1 - FIG. 6. Firstly, the entire configuration of the vehicle with an auto clutch according to this embodiment is explained by using FIG. 1 - Here, FIG. 1 is a block diagram showing the entire configuration of a vehicle with an auto clutch not belonging to the present invention.

Control unit 100 of the vehicle with an auto clutch calculates the temperature of clutch 3 provided between engine 1 and transmission 2. The torque generated by the engine is decreased, and the above-mentioned clutch 3 is released to intercept the power transfer from engine 1 when judged that the clutch is in the state of overheating. Moreover, brake actuator 6 is operated to generate the braking force to the vehicle when it is judged that the above-mentioned clutch 3 is in a release state. That is, control unit 100 generates the restraint force by which the roll back of the vehicle is controlled.

Control unit 100 is provided with clutch temperature calculation means 101, temperature abnormality judgment means 102, engine torque decrease command generation means 103, clutch release command generation means 104, clutch release state judgment means 105, and braking force command generation means 106.

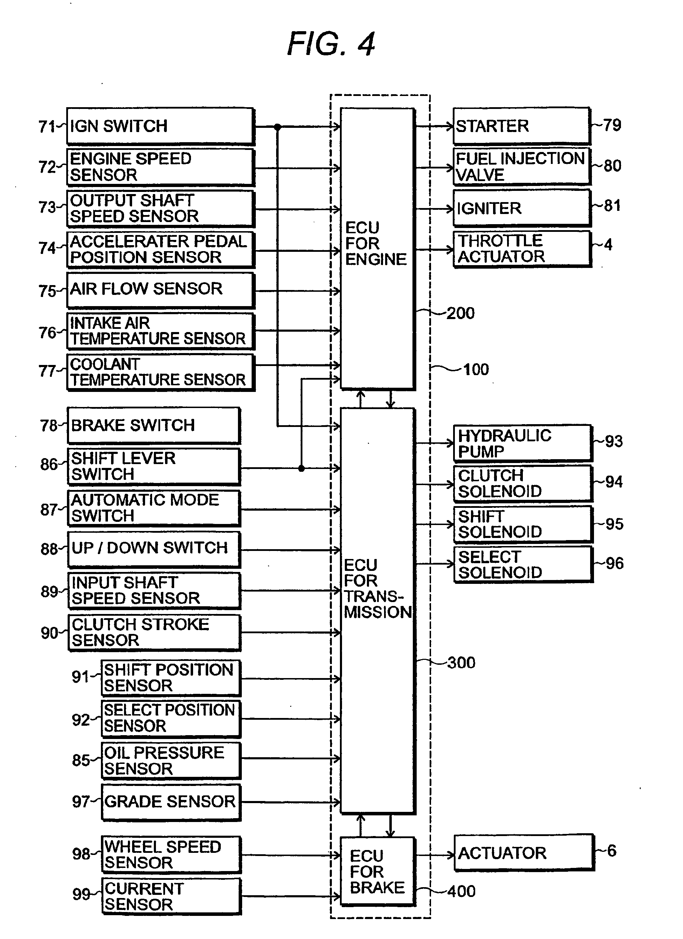

Clutch temperature calculation means 101 calculates the product of the calorie deprived outside of the clutch and the calorific value obtained from the difference of the rotation of the clutch and the transfer torque of the clutch. The signals of input rotating speed Ni from the input shaft speed sensor and the ignition switch operative position signal from the ignition switch described later by using FIG. 4 is input to clutch temperature calculation means 101, and the clutch temperature is calculated based on these signals. The method described in the Japanese Patent Application Laid-Open No. 8-230503, etc. for instance can be used to calculate the clutch temperature in clutch temperature calculation means 101. Optionally, it is also possible to detect the clutch temperature directly by arranging the temperature sensor in the neighborhood of the clutch.

Temperature abnormality judgment means 102, the temperature of the compares the clutch temperature (Namely, clutch temperature detected with the temperature sensor) calculated by clutch temperature calculation means 101 with the predetermined threshold value (the clutch burnout temperature), and judges the abnormality of temperature of the clutch. This threshold can be set in stages according to the overheating degree.
Optionally, it is also possible to recommend the drive to the overheating control of the clutch by generating warning in driver beforehand in which not only the limit temperature to the burnout is judged, but also the slight overheating in the process on the way of the temperature rise. Alternatively, it is possible to control the temperature rise of the clutch by increment compensation of the clutch transfer torque to reduce the load of the clutch.

Engine torque decrease command generation means 103 controls throttle actuator 4 provided in an intake pipe so that the engine speed may become the idling speed regardless of the driving demand from the driver when the abnormality of temperature is judged by temperature abnormality judgment means 102. Clutch release command generation means 104 outputs the command signal to release clutch 3 exceptionally regardless of the accelerator operation and the brake operation of the driver and intercepts the power transfer from engine 1 when the abnormality of temperature is judged by temperature abnormality judgment means 102. It is possible to control the overheating of clutch 3 and prevent the burnout thereof by this declutch operation or clutch release operation.

Clutch release state judgment means 105 compares a signal from a clutch stroke sensor described later with the predetermined threshold value (declutch judgment position) after the abnormality of temperature is judged by temperature abnormality judgment means 102, and judges that clutch 3 is released and the torque transfer is intercepted. Clutch release state judgment means 105 inputs a stroke signal of clutch 3 from a clutch stroke sensor described later by using FIG. 4, a road inclination signal from an slope sensor and a signal indicative of the velocity of the wheel from a wheel speed sensor. Clutch release state judgment means 105 gives the braking force command to brake actuator 6 when it was judged that the clutch was released based on the above-mentioned information, and the vehicle runs at ultra low speed (1 km/h or less for instance) in the climb inclination. Braking force command generation means 106 gives the braking force command for stopping the vehicle to brake actuator 6 regardless of the brake operation of the driver when judged that the clutch was released by clutch release state judgment means 105. Brake actuator 6 operates brake friction pad 7 is operated according to a braking force command, and controls the rotation of brake disc 8 to stop the vehicle.

Thus, by composing the principal part of control unit 100 as described above, it is possible to control the unexpected roll back of the vehicle caused by the clutch protection operation by controlling each actuator to generate the braking force to the vehicle when clutch 5 is released as clutch protection operation when the abnormality of a clutch is detected.

Although control unit 100 calculates the clutch temperature, and detects the abnormality of temperature in the above explanation, it may be possible to adopt the configuration which detects the time required and the rotational fluctuation, etc. in the engage process of the clutch, and the abnormality of function such as change in the coefficient of friction of the clutch.

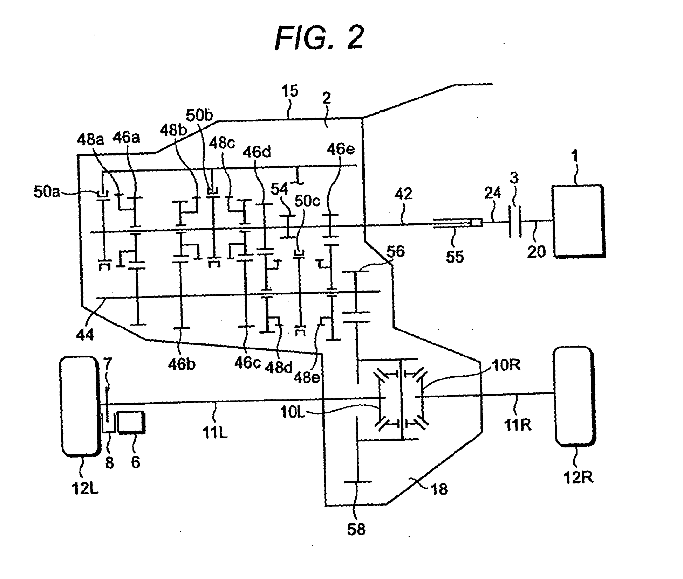

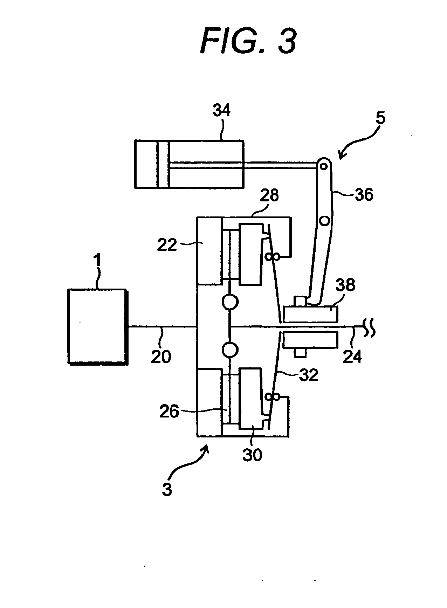

Next, the configuration of the transmission used for the vehicle with an auto clutch according to this embodiment is explained by using FIG. 2 and FIG. 3. Here, an example of the transmission for a FF (Front engine and Front drive) or a MR (Midship engine and Rear drive) vehicle is explained. FIG. 2 is a view showing the outline configuration of a transmission used for the vehicle with an auto clutch according to the first embodiment of the present invention. FIG. 3 is a view showing the configuration of a clutch used for the vehicle with an auto clutch according to the first embodiment of the present invention.

The driving force of engine 1 as a driving force for running or a motor is transferred to wheels 12R and 12L through clutch 3, gear type transmission 2, and differential gear device 18 as shown in FIG. 2.

Here, the configuration of clutch 3 is explained by using FIG. 3. Clutch 3 is ,for instance, a friction clutch of the dry and single disk type shown in FIG. 3. Clutch 3 comprises flywheel 22 installed in crank shaft 20 of engine 1, clutch disk 26 provided to clutch output shaft 42, pressure plate 30 provided to clutch housing 28, and diaphragm spring 32 which transfer the power by enegizing pressure plate 30 to the flywheel 22 side and strongly thrusting clutch disk 26. Release sleeve 38 is shifted toward the left in FIG. 3 through release fork 36 by clutch release cylinder 34 which is clutch actuator 5. As a result, one edge of diaphragm spring 32 is moved toward the left in the figure to release the clutch.

Gear type transmission 2 is provided in the housing which is common with one of differential gear device 18, and composes a part of the transaxle as shown in FIG. 2. Gear type transmission 2 is soaked with the lubricant which is filled in housing 15 by a fixed amount, and is lubricated along with differential gear device 18.

Gear type transmission 2 comprises: (a) a parallel two axes constant-mesh gear shift mechanism in which plural pairs of gear trains 46a, ···, 46e with different gear ratio and constant-mesh are provided between a pair of input shaft 42 and output shaft 44 arranged in parallel, and plural synchronized mechanism (rotation synchronizer) are provided corresponding to those gear trains 46a, ···, 46e, and (b) a shift selection shaft (not shown) which selectively moves either of three clutch hub sleeves 50a 50b or 50c of mesh type clutch 48a ··· 48e; and switches gear position. Therefore, forward gears have five gear positions. In addition, backward gear pair 54 is provided to input shaft 42 and output shaft 44, and engages with a backward idle gear provided to countershaft (not shown) to make the backward gear position.

Input shaft 42 is connected with clutch output shaft 24 of said clutch 3, and output shaft 44 provided with output gear 56 is engaged with annular gear 58 of differential gear device 18.

Clutch hub sleeve 50b is used for mesh type clutches 48b and 48c, and clutch hub sleeve 50c is used for mesh type clutches 48d and 48e. A shift selection shaft (not shown) is provided to rotate around the center of axle and move in an axial direction. The shift selection shaft is positioned at the following three positions in the axial direction by selection actuator (not shown). 1) A first selection position which can be connected with clutch hub sleeve 50c. 2) A second selection position which can be connected with clutch hub sleeve 50b. 3) A third selection position which can be connected with clutch hub sleeve 50a. Moreover, it is positioned at the following three positions around the center of axle by shift actuator (not shown). 4) a neutral position (the state in FIG. 2) at the center where all mesh type clutches 48a - 48e are intercepted and the backward gear position is not formed. 5) a first shift position (the right side in FIG. 2) on both sides in the center of axle. 6) a second shift position (the left side in FIG. 2). It becomes the state (neutral state) of power transfer interception that the power transfer between input shaft 42 and output shaft 44 is intercepted in neutral position.

The first gear position with the largest transmission ratio e (= rotating speed Ni of input shaft 42 / rotating speed No of output shaft 44) is formed by mesh type clutch 48e being connected at the first shift position of the first selection position. The second gear position with the second largest transmission ratio e is formed by mesh type clutch 48d being connected at the second shift position of the first selection position. The third gear position with the third largest transmission ratio e is formed by mesh type clutch 48c being connected at the first shift position of the second selection position. The fourth gear position with the fourth largest transmission ratio e is formed by mesh type clutch 48b being connected at the second shift position of the second selection position. The fifth gear position with the smallest transmission ratio e is formed by mesh type clutch 48a being connected at the first shift position of the third selection position. The backward gear position with the smallest transmission ratio e is formed at the second shift position of the third selection position.

Differential gear device 18 is one of a bevel gear type. Drive shafts 11 R and 11 L are connected with a couple of side gear 10R and 10L respectively by the spline engagement etc. to rotates the right and left front wheels (driving wheels) or rear wheels (driving wheels) 12R and 12L, respectively. Brake disc 7L is provided to driving wheel 12L, and the braking force is generated to the rotary motion of driving wheel 12L by operating brake friction pad 8L using brake actuator 6L. Moreover, the brake disc, the brake actuator, and the brake friction pad (not shown) are also provided to driving wheel 12R.

Here, it is possible to generate the above-mentioned braking force by brake actuator 6 without depending on the brake operation of driver. This is a well-known automatic braking system used for a system which assists in braking force at rapid braking or a system which starts and stops the vehicle while constantly controlling the following distance.

Although the gear type transmission is used as a transmission in the above explanation, the configuration of the transmission is not limited to the gear type, a transmission with an auto clutch such as a continuously variable transmission can be used similarly.

Next, the electric control system of the control device for the vehicle with an auto clutch according to this embodiment is explained by using FIG. 4. FIG. 4 is a block diagram showing an electric control system of a control device for the vehicle with an auto clutch according to the first embodiment of the present invention.

Control unit 100 comprises three electronic control units, electronic control unit (ECU: Electronic Control Unit) 200 for an engine, electronic control unit (ECU) 300 for a transmission and electronic control unit (ECU) 400 for a brake. Necessary information is exchanged via the telecommunication line between electronic control units. Each of ECU 200, 300 and 400 is composed of a microcomputer. The signal processing is carried out according to the programs stored in ROMs beforehand while using the temporary data storage function of RAMs. It is also possible to use while rewriting a rewritable ROM in case of necessity by using it as the storage function.

Ignition switch 71, engine speed sensor 72, output shaft speed sensor 73, accelerator pedal position sensor 74, air flow sensor 75, intake air temperature sensor 76, cooling water temperature sensor 77, brake switch 78, etc. are connected to ECU 200 for an engine. Signals indicative of the operative position of ignition switch 71, engine speed Ne, output shaft speed No, accelerator pedal position APS, intake air flow Q, intake air temperature Ta, engine cooling water temperature Tw, the operative position of brake switch 78, etc. are supplied to them, respectively. ECU 200 for an engine rotates starter 79 according to these input signals, starts engine 12, controls injection quantity of fuel injection valve 80 and fuel injection timing, or controls the ignition timing of a sparking plug by igniter 81. ECU 200 for an engine drives throttle actuator 4 further by inputting a necessary signal from ECU 300 for a transmission and controls the throttle opening.

Oil pressure sensor 85, ignition switch 71, shift lever switch 86, auto mode switch 87, up-and-down switch 88, brake switch 78, input shaft speed sensor 89, clutch stroke sensor 90, shift position sensor 91, selection position sensor 92, and slope sensor 97, etc. are connected with ECU 300 for a transmission. Former pressure Pa of hydraulic pump, operative position of ignition switch 71, lever position Ps which is an operation range of shift lever provided on the side of driver's seat, a signal for switching manual shift and automatic shift, an up-and-down signal (±) in the manual shift, ON/OFF of the brake, input rotating speed Ni, the stroke of clutch 3, stroke St of clutch release cylinder 34, the shift position which is the position at the circumference of the center of axle of shift selection shaft (not shown) driven by the shift actuator, the selection position which is the position in an axial direction of a shift selection shaft (not shown) driven by the selection actuator, the road inclination θ where the vehicle is running, etc. are supplied to ECU 300. ECU 300 for a transmission controls the operation of hydraulic pump 93 by inputting a necessary signal from the above-mentioned signals, and a necessary signal from ECU 200 for an engine control, and ECU 400 for a brake. Further, ECU 300 for a transmission switches the operation of the shift actuator and the selection actuator by changing clutch solenoid 94, shift solenoid 95, and selection solenoid 96, and controls the gear shift of gear type transmission 2 (including forward and backward speed switching control). In addition, it switches the operation of clutch release cylinder 34, and releases or engages clutch 3 at shifting.

Wheel speed sensor 98, current sensor 99, etc. are connected with brake control unit 400. Brake control unit 400 controls brake actuator 6 by inputting a necessary signal from ECU 300 for a transmission, electric current lm of a motor (not shown) for brake actuator 6, and wheel speed VSP.

The electric connection is as described above. Control unit 100 provides a command to decrease the engine torque as a security function at the abnormality of temperature of the clutch, and outputs an electric current command to clutch solenoid 94 in order to release clutch 3. Moreover, the control unit judges the release state of the clutch from a signal of clutch stroke sensor 90. When it is judged that it is a climb inclination based on a signal of slope sensor 97, the braking force generation demand is output to ECU 400 for a brake, brake actuator 6 is driven, and the braking force is generated. As a result, it becomes possible to prevent the burnout due to the overheating of the dutch and control the unexpected roll back of the vehicle caused by the clutch protection operation.

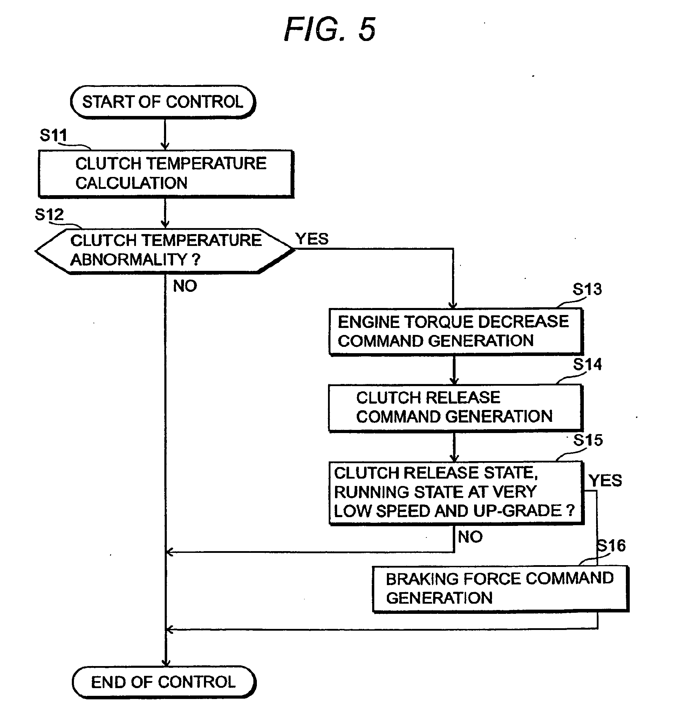

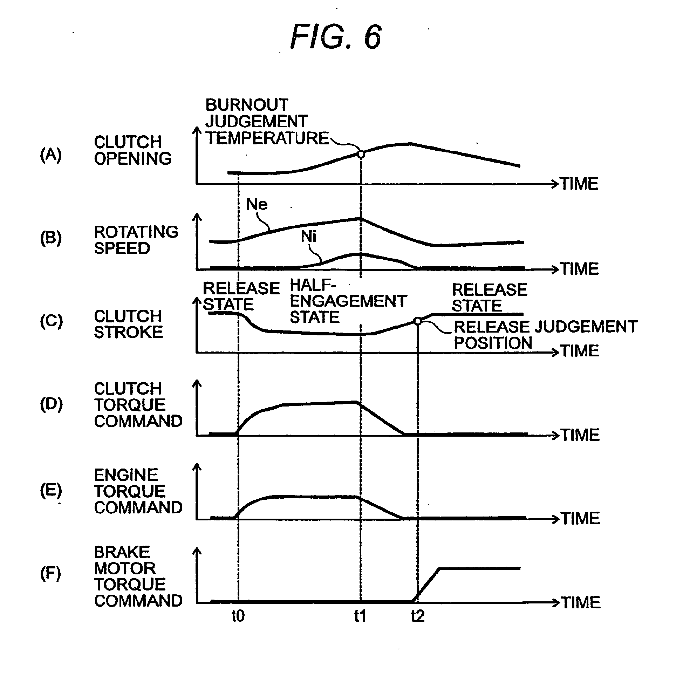

Next, the content of the control operation of the control device for the vehicle with an auto clutch according to this embodiment are explained by using FIG. 5 and FIG. 6. Here, FIG. 5 is a flow chart showing the content of the control of the control device for the vehicle with an auto clutch according to the first embodiment of the present invention. FIG. 6 is a timing chart showing the control operation of the control device for the vehicle with an auto clutch according to the first embodiment of the present invention. In FIG. 6, (A) of FIG. 6 shows the clutch temperature. (B) shows input shaft speed Ni of the transmission and engine speed Ne, (C) shows the clutch stroke, (D) shows the clutch torque command, (E) shows the engine torque command, and (F) shows the brake motor torque. Moreover, the axis of abscissas of FIG. 6 shows time.

ECU300 (clutch temperature calculation means 101 in control unit 100 of FIG. 1) for a transmission calculates the clutch temperature based on the calorific value from clutch 3 in step s11 of FIG. 5.

Next, ECU 300 (temperature abnormality judgment means 102 in control unit 100 of FIG. 1) for a transmission compares the clutch temperature calculated in step s11 with the predetermined threshold value, and judges the abnormality of temperature of the clutch in step s12. This control routine ends if the temperature is not abnormal. The processing advances to step s13 if judged the abnormality of temperature.

ECU 300 (engine torque decrease command generation means 103 in control unit 100 of FIG. 1) for a transmission outputs an engine torque decrease command to ECU 200 for an engine in step s13 if judged the abnormality of temperature. ECU 200 for an engine controls throttle actuator 4 regardless of a driving demand from a driver so that the engine speed may become the idling speed.

FIG. 6 shows a timing chart of the start operation in the climb inclination. ECU 200 for an engine increases an engine torque command to generate the engine torque corresponding to the accelerator operation when the accelerator operation of driver is carried out at time t0 (see E). As a result, engine speed Ne rises (see B). On the other hand, the torque generated in the engine is presumed from engine speed Ne, accelerator position APS, intake air temperature Ta, and intake air flow Q, etc., based on a clutch torque command shown in (D) of FIG. 6. This presumption value is set to a clutch torque command value. As a result, the clutch stroke is changed the position of the release state to the position of the half engagement (see C), and the torque transfer in the clutch is begun.

Here, the acceleration of the vehicle does not rise by specific inclination resistance in the start operation at the climb inclination. In a word, the clutch temperature rises rapidly because input shaft rotating speed Ni does not increase as shown in (B) of FIG. 6, and the half engagement of the clutch continues.

For instance, when the clutch temperature exceeds the burnout judgment temperature of the clutch at time t1 (see A), the engine torque command value is decreased to the value till which engine speed can maintain the idling rotation (see E).

ECU 300 (clutch release command generation means 104 in control unit 100 of FIG. 1) for a transmission outputs a command signal to release clutch 3 exceptionally regardless of the accelerator operation and the brake operation by driver. As a result, clutch 3 is released by brake actuator 6, and the power transfer from the engine is intercepted. That is, the clutch torque command value is also decreased as shown in (D) of FIG. 6, and the clutch release operation is carried out.

Next, ECU300 (clutch release state judgment means 105 in control unit 100 of FIG. 1) for a transmission judges whether clutch 3 is released, and the speed of the vehicle is in the state of an ultra low speed and the vehicle are running on the climb inclination in step s15. This control routine ends when this condition is not satisfied, and the processing advances to step s16 when this condition is satisfied.

ECU300 (braking force command generation means 106 in control unit 100 of FIG. 1) for a transmission outputs a demand command to generate the braking force to ECU 400 for a brake in step s16. ECU 400 for a brake gives the deterrent force to the roll back of the vehicle by driving brake actuator 6 regardless of the brake operation of this driver, and generating the braking force to the vehicle.

That is, when judged that the clutch stroke exceeds the predetermined release judgment position at time t2 of FIG. 6 and the transfer torque in the clutch becomes zero (FIG. 6 (C)), the braking force command is generated. And, ECU 400 for a brake receives the braking force command, raises the torque command to brake actuator 6 (FIG. 6 (F)), and generates the braking force even in the state without the brake operation of driver. Here, when the stroke in the state of the declutch in FIG. 6 (C) is assumed to be 100%, the clutch stroke is 50 - 80% at the releasing judgment position.

When it is judged the temperature is abnormal as a result of the calculation of the clutch temperature as explained above, the engine torque is decreased and the releasing operation of the clutch is carried out. And, it becomes possible to prevent the burnout due to the overheating of the clutch and control the unexpected roll back of the vehicle caused by the clutch protection operation by generating the braking force when the release state of the clutch is judged.

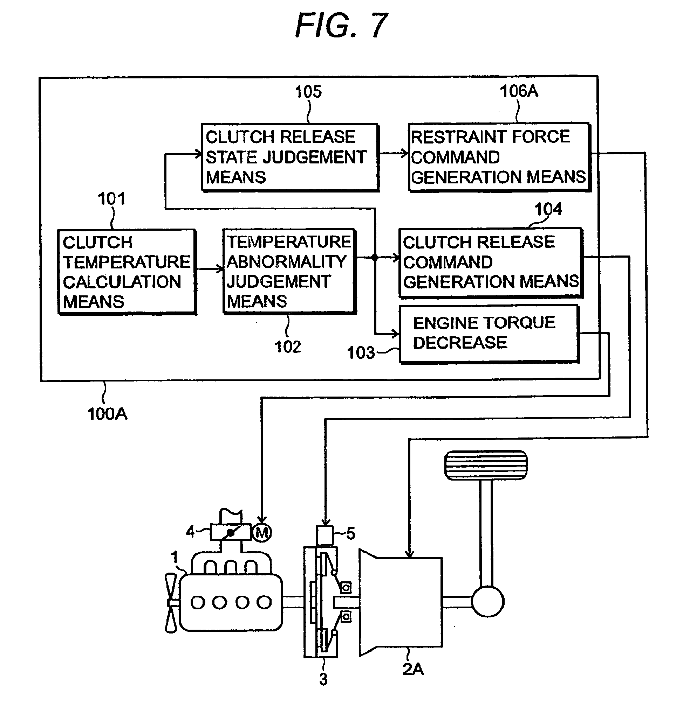

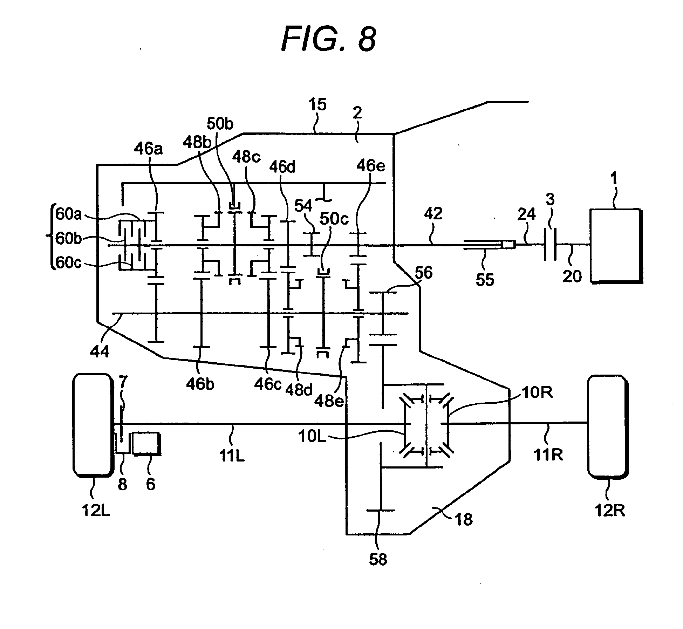

Next, the configuration and the operation of the control device for a vehicle with an auto clutch according to the present invention are explained by using FIG. 7 and FIG. 8. Here, FIG. 7 is a block diagram showing the entire configuration of a vehicle with an auto clutch according to the present invention. FIG. 8 is a view showing the outline configuration of a transmission used for the vehicle with an auto clutch according to the present invention. Here, as an example of the transmission for a vehicle, a FF (Front engine and Front drive) or a MR (Midship engine and Rear drive) vehicle is used. Like numerals in FIG. 1 and FIG 2 shows like parts. Moreover, the block diagram showing the electric control system of the control device for the vehicle with an auto clutch according to the invention is similar to one in FIG 4.

In the gear type transmission 2A shown in FIG. 7, torque transfer means (assist clutch) is provided to the gear train which forms a fifth gear position. The detailed configuration of the transmission 2A is described later by using FIG. 8 The control unit 100A is provided with restraint force command generation means 106A. The restraint force command generation means 106A provides a restraint force command to the transmission 2A to generate the restraint force to the vehicle regardless of the braking operation by a driver when judged that the clutch is released by clutch release state judgment means 105, and generates the restraint force to the force by which the vehicle is about to move backward by engaging the assistance clutch. That is, the control unit 100A generates the restraint force by which the roll back of the vehicle is controlled.

Here, the configuration of the gear type transmission 2A is explained by using FIG. 8. Basic configuration is the same as one shown in FIG. 2, and, further, the torque transfer means (assistance clutch) is provided to the gear train which forms the fifth gear position.

Clutch drum 60a is fixed to the drive gear of gear train 46a which forms the fifth gear position, and a plurality of drive plates 60c rotate with clutch drum 60a as one body. In addition, clutch hub (not shown) is fixed to input shaft 42, and a plurality of driven plates 60b rotate with the clutch hub as one body. Drive plate 60c and driven plate 60b are well-known multiplate disk wet type disks which transfer the torque according to shearing force of the lubricant by axially pressing clutch piston (not shown) according to the pressure of the oil put between plates. Because the fifth gear position can be formed by engaging this multiplate disk wet type disk 60, mesh type clutch 48a according to shearing force of the lubricant and clutch hub sleeve 50a shown in FIG. 1 can be omitted. In the gear type transmission according to the present embodiment, multiplate disk wet type disk 60 is used as a assistance clutch (torque transfer means) which can change the speed without releasing clutch 3 by by-passing the torque of the engine to the output shaft via itself at the gear shift.

While, it is possible to obtain the state of double engaging because and the torque circulation is caused in the transmission by generating the transfer torque to wet process multiple-disc clutch 60 in the state where the fixed gear position is formed by connecting arbitrary mesh type clutches, and the different gear ratio is formed. Restraining output shaft 44 by this double engaging becomes possible.

When temperature abnormality judgment means 102 in the control unit 100A shown in FIG. 7 judges the abnormality of temperature, clutch release command generation means 104 outputs a clutch release command. When the release of the clutch is detected by clutch release state judgement means 105, restraint force command generation means 106A generates transfer torque of wet process multiple-disc clutch 60, and generates the restraint force to the output shaft of the transmission 2A.

As explained above, when it is judged the clutch temperature is abnormal by calculating the temperature, the engine torque is decreased and the releasing operation of the clutch is carried out. It becomes possible to prevent the burnout due to the overheating of the clutch and control the unexpected roll back of the vehicle caused by the clutch protection operation by generating the braking force when the release state of the clutch is judged.

the control device and the control method of the vehicle with an auto clutch shown in FIG 1 and FIG 7 is for the processing when the temperature rises to the limit to the burnout due to the overheating of the clutch. They are final protection control systems. However, it is effective to control the heat generation of the clutch in the process to the above-mentioned limit value by judging the slight overheating and giving some treatment so as not to reach the above-mentioned limit value as the actual clutch protection control. An example, not covered by the presently claimed invention, is explained, in which the temperature rise of the clutch is controlled in the process to the above-mentioned limit value by judging the slight overheating of the clutch.

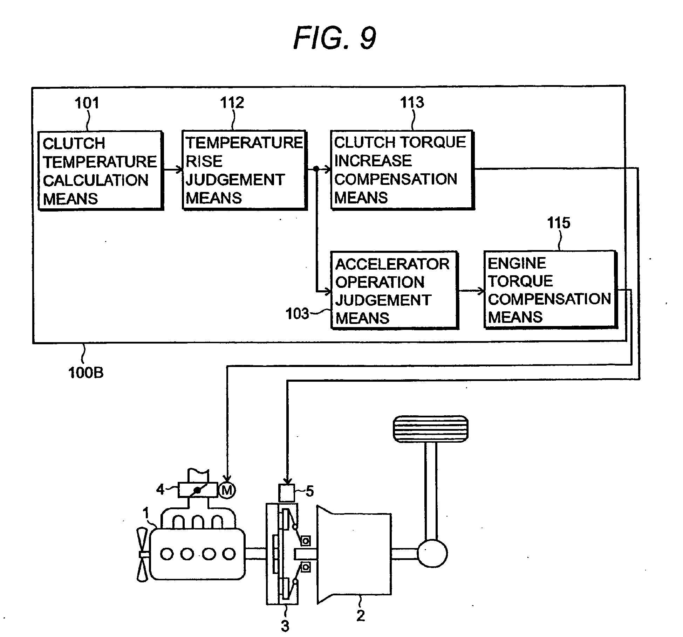

Next, the configuration and the operation of the control device for the vehicle with an auto clutch according to a second example, not covered by the presently invention, are explained by using FIG. 9 - FIG 12. FIG. 9 is a block diagram showing the entire configuration of a vehicle with an auto clutch according to the second example. Like numerals in FIG. 1 and FIG. 9 show like parts. Moreover, the block diagram showing the electric control system of the control device for the vehicle with an auto clutch according to this example is similar to the embodiment described in FIG. 4.

Control unit 100B calculates the temperature of clutch 3 provided between engine 1 and gear type transmission 2. When the calculated temperature rises to a fixed value, control unit 100B judges the temperature rise of clutch 3. And, control unit 100B has the function as a temperature control means, by which the clutch torque is increased and the engine torque is increased or decreased according to the accelerator operation of driver when judged the temperature rise.

Control unit 100B comprises clutch temperature calculation means 101, temperature rise judgment means 112, clutch torque increase correction means 113, accelerator operation judgment means 114, and engine torque correction means 115.

Clutch temperature calculation means 101 calculates the clutch temperature by multiplying the calorific value obtained from the clutch transmission torque and the rotating speed difference of the clutch and the calorie deprived outside of the clutch as explained in FIG. 1.

Temperature rise judgment means 112 compares the clutch temperature detected by the temperature sensor or that calculated by clutch temperature calculation means 101 with the predetermined threshold value (the temperature for the clutch temperature rise judgment), and judges the temperature rise of the clutch. This threshold value is set to the temperature lower than the limit value to the burnout of the clutch in temperature abnormality judgment means 102 of FIG. 1, and the set value is used as a threshold value to judge the comparatively slight overheating.

Clutch torque increase means 113 decreases an amount of the slipping in the state of the half engagement of clutch 3 by increasing the clutch torque. In a word, heat load to the clutch is reduced by shortening the time required until the rotating speed difference of the clutch decreases.

Accelerator operation judgment means 114 judges the presence of the accelerator operation by a driver based on a signal from accelerator pedal position sensor 114. More concretely, the accelerator operation is judged by ON/OFF of the idling switch. In the start operation from the stop state of the vehicle. The accelerator operation corresponds to the creep operation for idling switch ON.

Engine torque correction means 115 controls throttle actuator 4 provided to the intake pipe to increase or decrease the engine torque according to the result of accelerator operation judgment means 114. More concretely, the engine torque is reduced when the accelerator operation is carried out, and the heat load to clutch 3 is reduced. If the engine torque is decreased when the accelerator operation is not carried out, the engine speed drops below the idling speed, and the behavior when creeping becomes unstable. As a result, something wrong such as the stop of the engine occurs. it is, therefore, necessary to increase the engine torque when the accelerator operation is not carried out.

Each actuator is controlled by composing the principal part of control unit 100B like the above. Thereby, the temperature rise of the clutch in the start operation can be controlled without stopping the engine even when the temperature of clutch 3 rises to a fixed value.

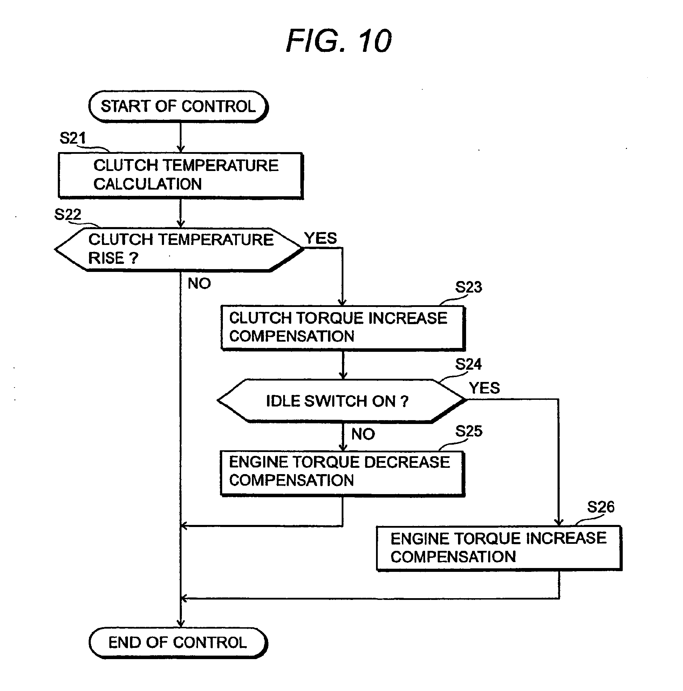

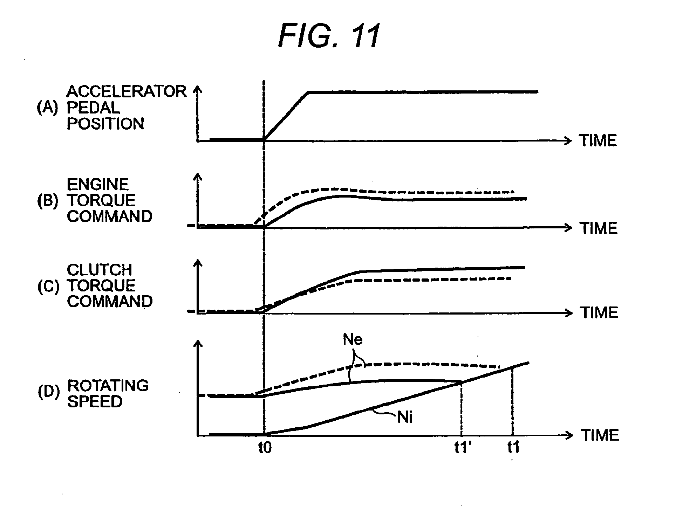

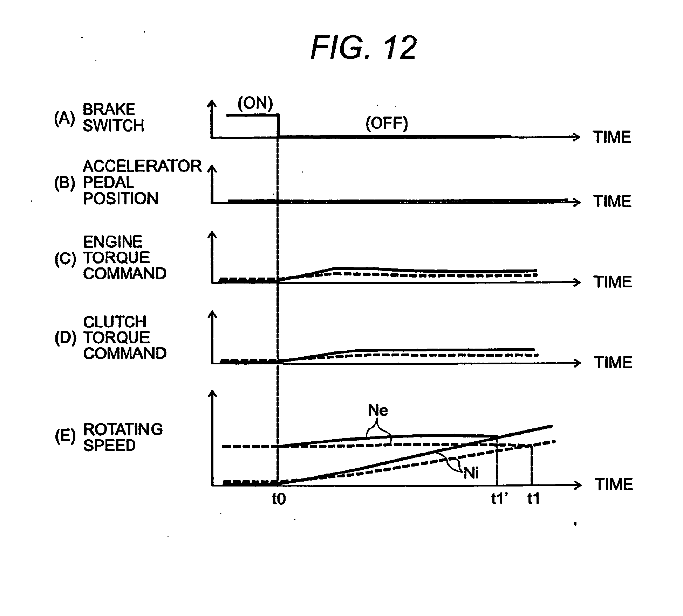

Next, the operation of the control device for the vehicle with an auto clutch according to this example is explained by using FIG. 10 - FIG. 12. Here, FIG. 10 is a flow chart showing the operation of a control device for the vehicle with an auto clutch according to the second example. FIG. 11 is a timing chart illustrating the operation of the control device for the vehicle with an auto clutch according to the second example. FIG. 12 is a timing chart showing the control operation of the control device for the vehicle with an auto clutch according to the second example.

ECU 300 (clutch temperature calculation means 101 in control unit 100 of FIG 8) for a transmission shown in FIG. 4 calculates the temperature on the surface of the clutch from the calorific value of clutch 3 in step s21 of FIG. 10.

Next, ECU 300 (temperature rise judgment means 112 in control unit 100 of FIG 8) for a transmission compares the temperatures of the clutch calculated in step s21 with the threshold value set beforehand, and judges the temperature rise of the clutch. This control routine ends when judged the temperature is not rising, and the processing advances to step s23.

ECU 300 (clutch torque increase correction means 113 of control unit 100 of FIG. 8) for a transmission increases the clutch torque and decreases an amount of slipping in the state of the half engagement of clutch 3 in step s23 when judged the temperature rise. In a word, the heat load to the clutch is reduced by shortening the time required until the rotating speed difference of the clutch disappears.

Next, ECU 300 (accelerator operation judgment means 114 in control unit 100 of FIG. 8) for a transmission judges the presence of the accelerator operation by a driver based on a signal from accelerator pedal position sensor 74 in step s24. When the accelerator operation is carried out, that is, at the start operation by the driver's accelerator operation, ECU 300 (engine torque correction means 115 in control unit 100 of FIG. 8) for a transmission reduces the heat load to clutch 3 by outputting a command signal to ECU 200 for an engine to decrease the engine torque, and decreasing the throttle opening in step s25.

On the other hand, when the accelerator operation is not carried out, that is, at the creep operation, ECU 300 (engine torque correction means 115 in control unit 100 of FIG. 8) for an transmission controls the engine speed not to drop below the idling rotation by outputting a command signal to ECU 200 for an engine to increase the engine torque, and increasing the throttle opening in step s26.

The temperature rise of the clutch in the start operation can be controlled without stopping the engine by controlling like this.

Here, the operation when starting from the stop state of the vehicle is explained by using FIG. 11, in which the accelerator operation by a driver is carried out at time t0. The ordinate of FIG. 11 (A) shows the accelerator position. The ordinate of FIG. 11 (B) shows the engine torque command. The ordinate of FIG. 11 (C) shows the clutch torque command. The ordinate of FIG. 11 (D) shows the rotating speed. The abscissa of FIG. 11 shows time. It should have been judged that the clutch temperature rise by step s22 before time t0.

Here, broken lines in FIG. 11 (B), (C), and (D) show waveforms before it is judged the temperature rise in temperature rise judgment means 112. There is the rotating speed difference between engine speed Ne and input shaft speed Ni, when the temperature rise judgment is in failure. The so-called slipping continues until time t1.

However, as shown by a solid line in FIG. 11 (C), the clutch torque command is increased by clutch torque amendment means 113 after judging the temperature rise by temperature rise judgment means 112. Moreover, as shown by a solid line in FIG. 11 (D), the engine torque command is decreased by engine torque amendment means 115. Therefore, the load for the clutch is decreased and the temperature rise can be controlled because engine speed Ne is decreased and slipping is shortened in the period from time t1 to time t1' as shown by a solid line in FIG. 11 (D).

Next, the operation when creeping from the stop state of the vehicle is explained by using FIG. 12, in which the brake operation by a driver is released at time t0. The ordinate of FIG. 12 (A) shows the state of the brake switch. The ordinate of FIG. 12 (B) shows the accelerator position. The ordinate of FIG. 12 (C) shows the engine torque command. The ordinate of FIG. 12 (D) shows the clutch torque command. The ordinate of FIG. 12 (E) shows the rotating speed. The axis of abscissas of FIG. 12 shows time. It should have been judged that the clutch temperature rise by step s22 before time t0.

Here, broken line in FIG. 12 shows the waveform before it is judged the temperature rise in temperature rise judgment means 112. The slipping continues until time t1 when the temperature rise judgment is in failure.

However, as shown by a solid line in FIG. 12 (D), the clutch torque command is increased by clutch torque amendment means 113 after judging the temperature rise by temperature rise judgment means 112. Moreover, as shown by a solid line in FIG. 12 (C), the engine torque command is also increased by engine torque amendment means 115. Therefore, the temperature rise can be controlled because engine speed Ne is decreased, input shaft speed Ni is increased and slipping is shortened in the period from time t1 to time t1' as shown by a solid line in FIG. 12 (E). Moreover, the engine is not stopped even by such a clutch overheating control action.

The temperature rise of the clutch in the start operation can be controlled without stopping the engine by increasing the clutch torque, and switching the increase correction and the decrease correction of the engine torque based on the presence of the accelerator operation by a driver, when the clutch temperature is calculated as explained above and it is judged the temperature rise.

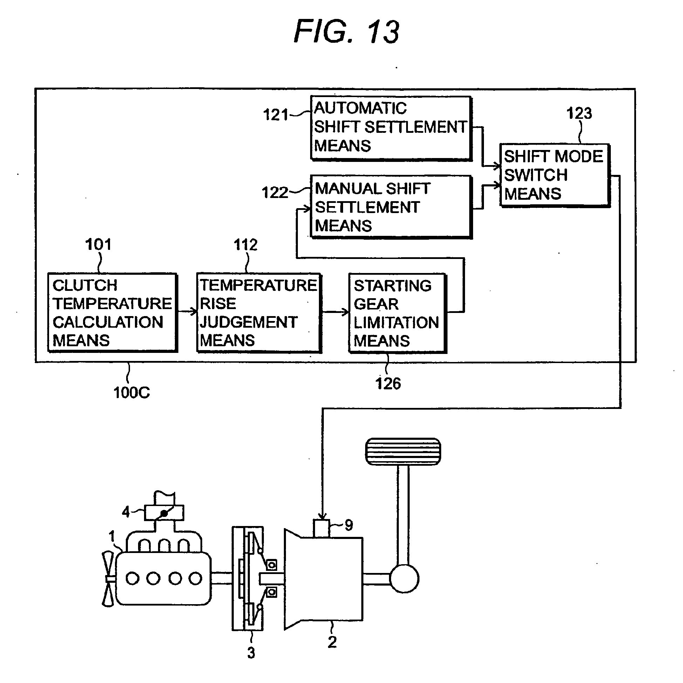

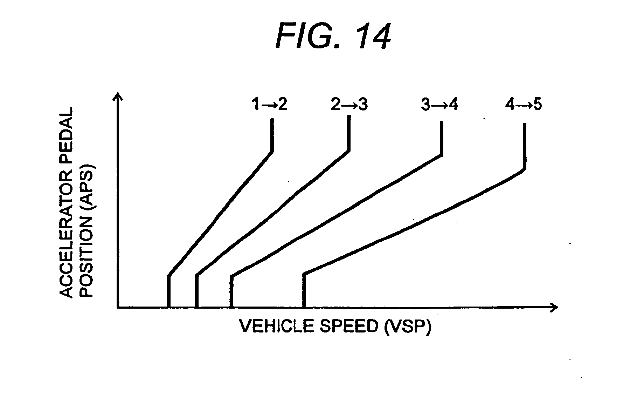

Next, the configuration and the operation of the control device for the vehicle with an auto clutch according to a third example, not covered by the presently claimed invention, are explained by using FIG. 13 and FIG 14. Here, FIG. 13 is a block diagram showing the entire configuration of a vehicle with an auto clutch according to the third example. FIG 14 is an explanatory drawing showing the shift map in the vehicle with an auto clutch according to the third example. Like numerals in FIG. 1 and FIG. 9 show like parts. Moreover, the block diagram showing the electric control system in the control device for the vehicle with an auto clutch according to this example is similar to the example described in FIG 4.

The gear type transmission carries out the shift according to an automatic shift mode in which the following gear position is automatically decided based on the shift map obtained from the relationship between the accelerator position and the wheel speed, and a manual shift mode in which sequential up/down shifts are decided by the driver's intention. In each shift mode, the shifting is carried out by operating shift/selection actuator 9, and switching the engaging of mesh type clutches 48a - 48e shown in FIG. 2. The automatic shift mode and the manual shift mode are selected with auto mode switch 87 which is switched by a driver as shown in FIG. 4.

Here, the traction control is carried out in the start operation on the snowy road, in which a vehicle is started after the start gear is set to the 2nd gear, because the coefficient of friction between the driving wheel and the road decreases and the wheels may slip. The switch from the start gear to the 2nd gear is carried out by inputting up switch 88 of FIG. 4 after driver's setting to the manual shift mode. Moreover, there is another method of switching the start gear to 2nd gear similarly by separately providing a snow mode switch on the driver's seat, and recognizing this switch. Here, the desired performance of the driving force is not obtained if such an operation is done when clutch 3 generates heat, and the temperature rise of the clutch will be promoted.

Then, the temperature of clutch 3 is calculated in this example. When the clutch temperature calculated is a fixed value or more, it is judged the temperature rise of clutch 3. And, the gear position selected at the start operation is limited when judged the temperature rise. More concretely, the start operation at a higher gear position excluding 1st gear or the backward gear position is prohibited.

Control unit 100 C has the function as a temperature control means as shown in FIG. 13. This control unit 100 C comprises clutch temperature calculation means 101, temperature rise judgment means 112, automatic shift settlement means 121, manual shift settlement means 122, shift mode switch means 123, and start gear position limitation means 126.

Clutch temperature calculation means 101 calculates the clutch temperature by multiplying the calorific value obtained from the rotating speed difference of the clutch and the clutch transfer torque and the calorie deprived outside of the clutch.

Temperature rise judgment means 112 compares the clutch temperature calculated by clutch temperature calculation means 101 or the clutch temperature detected with a temperature sensor with the threshold value (the temperature for the clutch temperature rise judgment) set beforehand, and judges the temperature rise of the clutch. This threshold value is set to the temperature lower than the limit value to the burnout of the clutch, and the set value is used as a threshold value to judge the comparatively slight overheating.

Start gear limitation means 126 limits the selection of the gears at starting by masking a gear selection signal at starting if the driver selects a higher gear position excluding the 1 st gear or the backward gear at the start.

Manual shift settlement means 122 decides the gear position in sequence according to a signal from up/down switch 88. However, when the selection of gear at starting is limited by start gear limitation means 126, limits only to the 1 st gear even if the 2nd gear is selected.

Automatic shift settlement means 121 decides the gear position from the shift map shown in FIG. 14, based on signals from accelerator pedal position sensor 74 and output shaft rotation sensor 73. In the shift map, the gear position at that time is decided based on the vehicle speed (VSP) and the accelerator position (APS) as shown in FIG. 14.

Shift mode switch means 123 selects either of the results of automatic shift settlement means 101 and manual shift settlement means 122 according to a signal from auto mode switch 87.

As explained above, it becomes possible to control the temperature rise of the clutch occurred at the start operation by limiting the start gear when the clutch temperature rises.

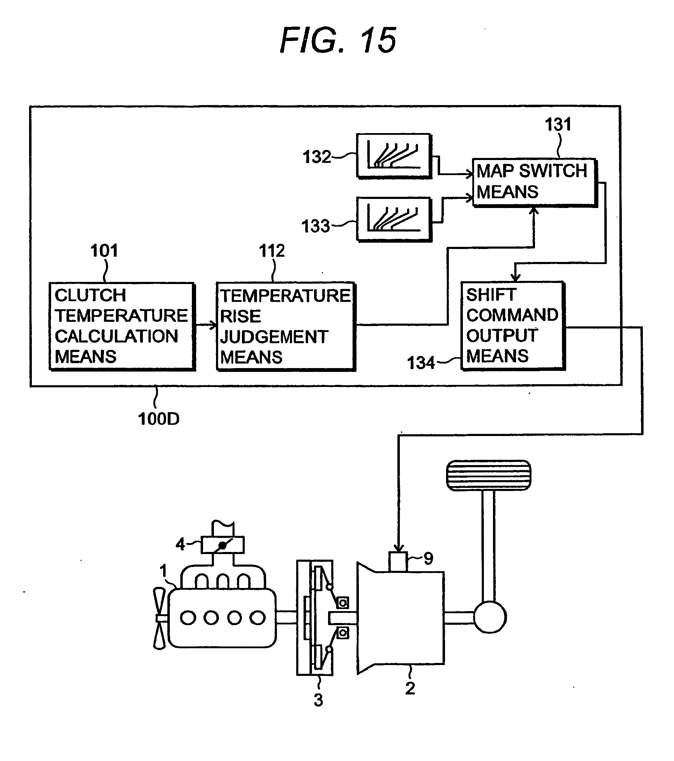

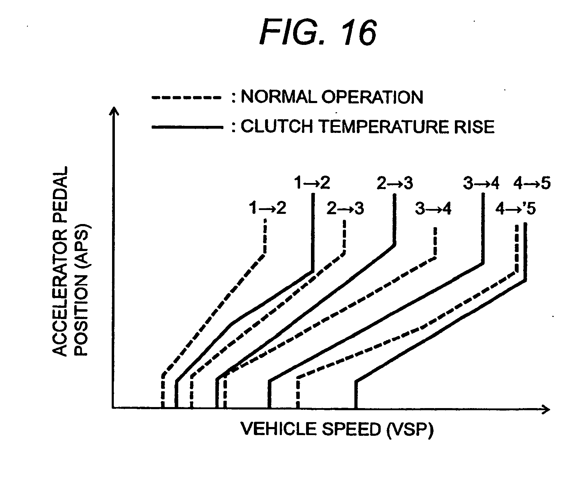

Next, the configuration and the operation of the control device for the vehicle with an auto clutch according to a fourth example, not covered by the presently claimed invention, are explained by using FIG. 15 and FIG. 16. Here, FIG. 15 is a block diagram showing the entire configuration of a vehicle with an auto clutch according to the third example. FIG 16 is an explanatory drawing showing the shift map in the vehicle with an auto clutch according to the fourth example. Like numerals in FIG 1 and FIG. 9 show like parts. Moreover, a block diagram showing the electric control system of the control device for the vehicle with an auto clutch according to this example is similar to the example described in FIG 4.

Control unit 100D has the function as the temperature control means as shown in FIG 15. Control unit 100D comprises clutch temperature calculation means 101, temperature rise judgment means 112, map switch means 131, map 132 in the normal operation, map 132 in the clutch temperature rise operation and shift command output means 134.

Here, map 132 in the normal operation and map 132 in the clutch temperature rise operation are explained by using FIG. 16. The dotted line usually shows a shift map in map 132 in the normal operation, and the solid line shows a shift map in map 132 in the clutch temperature rise operation. In the shift map at the clutch temperature rise operation, the shift diagram is usually set in the higher speed side compared with the map at the normal operation, and the shift frequency is decreased.

In FIG. 15, clutch temperature calculation means 101 calculates the clutch temperature by multiplying the calorific value obtained from the clutch rotating speed difference and the clutch transfer torque and the calorie deprived outside of the clutch.

Temperature rise judgment means 112 compares the clutch temperature calculated by clutch temperature calculation means 101 or the clutch temperature detected by the temperature sensor with the predetermined threshold value (clutch temperature rise judgment temperature), and judges the temperature rise of the clutch. The above-mentioned threshold is set to the temperature lower than the limit temperature to the burnout of the clutch, and assumed to be a threshold value by which the comparatively slight overheating is judged.

Map switch means 131 selects map 132 in the clutch temperature rise operation when judged that the clutch temperature rises by temperature rise judgment means 112. The map is switched so that map 132 in the normal operation is selected when the clutch temperature does not rise.

Shift command output means 134 selects the gear position according to the vehicle speed and the accelerator position which are input signals by using either map 132 in the normal operation or map 132 in the clutch temperature rise operation, outputs the shift command to shift/selection actuator 9, and executes the shift operation.

Here, in order to carry out a series of operation that clutch 3 is released when shift and the clutch is engaged again after the gear is changed to the fixed gear position, the temperature rise of the clutch can be controlled by decreasing the engaging operation of the clutch, that is, the chance to enter the state of slipping by decreasing the shift frequency by using map 133.

Thus, the temperature rise of the clutch in the start operation can be controlled by composing the principal part of control unit 100 as described above and controlling each actuator.

When the clutch temperature rises, the temperature rise of the clutch can be controlled by shifting the shift diagram to high-speed side as explained above.

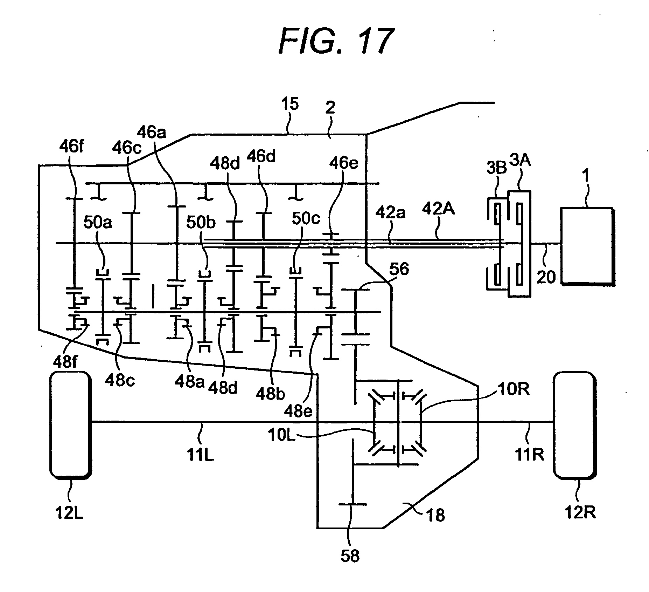

Next, the configuration and the operation of the vehicle with an auto clutch according to a fifth example, not covered by the presently claimed invention, are explained by using FIG. 17. FIG. 17 is a block diagram showing the entire configuration of the vehicle with an auto clutch according to the fifth example. Like numerals in FIG. 2 and FIG 17 show like parts. Moreover, the block diagram showing an electric control system of the control device for the vehicle with an auto clutch is similar to the embodiment described in FIG. 4.

The main configuration of the transmission according to this example is similar to one in FIG 2a. However, a gear type transmission of so-called twin clutch method is used, in which clutches 3A and 3B are provided between engine 1 and gear type transmission 2. The input shaft of this gear type transmission is made with hollow two axes. Constant-mesh gear trains 46f, 46c, and 46a are provided between the input shaft 42A and output shaft 44 connected with said clutch 3A, the gear ratio of the constant-mesh gear trains being different. Constant-mesh gear trains 46d, 46b, and 46e are provided between the input shaft 42B and output shaft 44 connected with said clutch 3B, the gear ratio of the constant-mesh gear trains being different. A plurality of mesh type clutches 48a, ···, 48e with synchronized mechanism (rotary synchronizer) which correspond to these gear train 46a, ···, 46e are provided to output shaft 44. Further, the shift selection shaft is provided to switch the gear position by selectively moving either of three clutch hub sleeves 50a, 50b and 50c of mesh type clutches 48a, ···, 48e. As a result, six forward gears are formed. Gear train e corresponds to the gear train which forms a first gear position. Gear train e corresponds to the gear train which forms a first gear position. Gear train d corresponds to the gear train which forms a second gear position. Gear train c corresponds to the gear train which forms a third gear position. Gear train b corresponds to the gear train which forms a fourth gear position. Gear train a corresponds to the gear train which forms a fifth gear position. And, gear train f corresponds to the gear train which forms a sixth gear position. Therefore, when the shift is carried out in sequence, this gear type transmission changes the speed by switching the clutch so that one of clutch 3A and clutch 3B may be engaged and the other clutch may be released. As a result, the shift without the torque interruption is achieved.

The control method in the gear type transmission of such a twin clutch method is similar to that in control unit 100 shown in FIG. 1, control unit 100A shown in FIG. 7 or control unit 100C shown in FIG. 13.

That is, control unit 100 individually calculates the temperature of clutches 3A, 3B in FIG. 17, compares this clutch temperature with the temperature abnormality judgment value set beforehand, and judges the abnormality of the temperature. When judged the abnormality of temperature, control unit 100 decreases the engine torque, and releases the clutch 3A or clutch 3B whose temperature is abnormal. And, if the vehicle is running on the climb inclination and the release state of clutch 3A or clutch 3B is detected, the braking force to the vehicle is generated. It becomes possible by having such a function to control the unexpected roll back of the vehicle caused by the clutch protection operation by generating the braking force when the release state of the clutch is judged.

Moreover, the control unit 100A individually calculates the temperature of clutches 3A, 3B, compares this clutch temperature with the clutch temperature rise judgment value set beforehand, and judges the rise of the temperature. The clutch torque is increased and the accelerator operation of driver is judged when judged the temperature rise. The engine torque is increased or decreased according to this judgment result, the heat load to the clutch 3A or clutch 3B is reduced. The temperature rise of the clutch in the start operation can be controlled without stopping the engine by having such a function.

Further, control unit 100 C individually calculates the temperature of clutches 3A, 3B, compares this clutch temperature with the clutch temperature rise judgment value set beforehand, and judges the rise of the temperature. The gear position selected in the start operation are limited when judged the temperature rise. More concretely, the start operation by the shift gear formed with the gear train which clings the input shaft 42A or 42B engaged to the clutch judged that the temperature is rising is prohibited. The temperature rise of the clutch in the start operation can be controlled by having such a function.

In the above explanation, control units 100, 100A execute the control when the temperature is abnormal, and control unit 100B, 100C, 100D execute the control at the temperature rise (when clutch temperature becomes the temperature more than the threshold value below the abnormal temperature). By providing either of the function of control unit 100 or control unit 100A or at least one of the function of control unit 100B, 100C and 100D to ECU 300, it may become possible to control so that the temperature should not rise at the temperature rise, and execute the control against the abnormality of temperature when the temperature rise cannot be prevented even by the control and the abnormality of temperature is occurred.

## Claims

1. Control device for a vehicle with an auto clutch by which an engaging force of the clutch (3) is automatically operable and which controls the driving force transferred from an engine (1) to a transmission (2) by an actuator (5), comprising:
- an abnormal detection means (102) which detects an abnormality of said clutch (3),
- a clutch release means (104) which releases said clutch (3) when an abnormality of said clutch (3) is detected by this abnormal detection means (102),
- a clutch release state judgment means (105) which judges the release state of said clutch (3) by said clutch release means (104),
- a restraint force command generation means (106A) which generates a command to generate a restraint force to restrain the roll back of said vehicle when judged that said clutch (3) is released by said clutch release state judgment means (105), and
- a restraint force generation means which generates the restraint force to restrain the roll back, of said vehicle based on the command from said restraint force command generation means (106A),
**characterized in that**
said transmission (2) is a gear type transmission, and said restraint force generation means is a torque transfer means provided between an input shaft (42) and an output shaft (44) of said gear type transmission, wherein the torque transfer means is an assistance clutch (60).

2. Control device for a vehicle with an auto clutch according to claim 1, **characterized in that** said assistance clutch is a multiplate disk wet process type clutch (60).

3. Control device for a vehicle with an auto clutch according to claim 1, **characterized in that** when the temperature of said clutch (3) becomes more than the first predetermined temperature, said abnormal detection means (102) detects the abnormality of temperature of said clutch (3).

4. Method of controlling a vehicle with an auto clutch which automatically operates an engaging force of the clutch (3) which controls the driving force transferred from an engine (1) to a transmission (2) by an actuator (5), comprising the steps of:
releasing said clutch (3) when abnormality of said clutch (3) is detected,
generating a restraint force command by a restraint force command generation means (106A) to generate a restraint power to restrain the roll back of said vehicle when judged that said clutch (3) is released, and generating the restraint force to restrain the roll back of said vehicle based on the command from the restraint force command generation means (106A);
**characterized by**
engaging an assistance clutch (60) provided between an input shaft (42) and an output shaft (42) of a gear type transmission for generating the restraint force to a force by which the vehicle is about to move backward.

5. Vesicle having an engine (1), a transmission (2), and an auto clutch by which an engaging force of the clutch (3) is automatically operable and which controls the driving force transferred from the engine (1) to the transmission (2) by an actuator (5), **characterized by** a control device according to at least one of the claims 1 to 4.

## Patentansprüche

1. Steuervorrichtung für ein Fahrzeug mit einer automatischen Kupplung, durch die eine Einrückkraft der Kupplung (3) automatisch betätigbar ist und die die Antriebskraft, die von einem Motor (1) an ein Getriebe (2) übertragen wird, durch einen Aktor (5) steuert, mit:
- einem Anomalieerfassungsmittel (102), das eine Anomalie der Kupplung (3) erfasst,
- einem Kupplungsausrückmittel (104), das die Kupplung (3) ausrückt, wenn durch dieses Anomalieerfassungsmittel (102) eine Anomalie der Kupplung (3) erfasst wird,
- einem Kupplungsausrückzustand-Beurteilungsmittel (105), das den durch das Kupplungsausrückmittel (104) hergestellten Ausrückzustand der Kupplung (3) beurteilt,
- einem Hemmkraftbefehl-Erzeugungsmittel (106A), das einen Befehl erzeugt, um eine Hemmkraft zu erzeugen, um das Zurückrollen des Fahrzeugs zu hemmen, wenn durch das Kupplungsausrückzustand-Beurteilungsmittel (105) beurteilt wird, dass die Kupplung (3) ausgerückt ist, und
- einem Hemmkraft-Erzeugungsmittel, das die Hemmkraft zum Hemmen des Zurückrollens des Fahrzeugs anhand des Befehls von dem Hemmkraftbefehl-Erzeugungsmittel (106A) erzeugt,
**dadurch gekennzeichnet, dass**
das Getriebe (2) ein Zahnradgetriebe ist und das Hemmkraft-Erzeugungsmittel ein Drehmomentübertragungsmittel ist, das zwischen der Eingangswelle (42) und der Ausgangswelle (44) des Zahnradgetriebes vorgesehen ist, wobei das Drehmomentübertragungsmittel eine Hilfskupplung (60) ist.

2. Steuervorrichtung für ein Fahrzeug mit einer automatischen Kupplung nach Anspruch 1, **dadurch gekennzeichnet, dass** die Hilfskupplung eine Mehrscheiben-Nassprozesskupplung (60) ist.

3. Steuervorrichtung für ein Fahrzeug mit einer automatischen Kupplung nach Anspruch 1, **dadurch gekennzeichnet, dass** das Anomalieerfassungsmittel (102) dann, wenn die Temperatur der Kupplung (3) höher als die erste vorgegebene Temperatur wird, die Temperaturanomalie der Kupplung (3) erfasst.

4. Verfahren zum Steuern eines Fahrzeugs mit einer automatischen Kupplung, die eine Einrückkraft der Kupplung (3) automatisch betätigt und die die Antriebskraft, die von einem Motor (1) an ein Getriebe (2) übertragen wird, durch einen Aktor (5) steuert, mit den folgenden Schritten:
Ausrücken der Kupplung (3), wenn eine Anomalie der Kupplung (3) erfasst wird,
Erzeugen eines Hemmkraftbefehls durch ein Hemmkraftbefehl-Erzeugungsmittel (106A), um eine Hemmkraft zum Begrenzen des Zurückrollens des Fahrzeugs zu erzeugen, wenn beurteilt wird, dass die Kupplung (3) ausgerückt ist, und Erzeugen der Hemmkraft, um das Zurückrollen des Fahrzeugs anhand des Befehls von dem Hemmkraftbefehl-Erzeugungsmittel (106A) zu hemmen;
**gekennzeichnet durch**
Einrücken einer Hilfskupplung (60), die zwischen einer Eingangswelle (42) und einer Ausgangswelle (42) eines Zahnradgetriebes vorgesehen ist, um für eine Kraft, **durch** die das Fahrzeug dazu veranlasst wird, rückwärts zu rollen, die Hemmkraft zu erzeugen.

5. Fahrzeug, das einen Motor (1), ein Getriebe (2) und eine automatische Kupplung, durch die eine Einrückkraft der Kupplung (3) automatisch betätigbar ist und die die Antriebskraft, die von dem Motor (1) an das Getriebe (2) übertragen wird, durch einen Aktor (5) steuert, umfasst, **gekennzeichnet durch** eine Steuervorrichtung nach wenigstens einem der Ansprüche 1 bis 4.

## Revendications

1. Dispositif de commande d'un véhicule équipé d'un embrayage automatique, grâce auquel la force de mise en prise d'accouplement de l'embrayage (3) est automatiquement utilisable et qui commande l'énergie d'entraînement transmise depuis un moteur thermique (1) à une transmission (2) par un dispositif d'actionnement (5), comprenant :
- un moyen de détection d'anomalie (102) qui détecte une anomalie au niveau dudit embrayage (3),
- un moyen de désaccouplement de l'embrayage (104) qui désaccouple ledit embrayage (3) lorsqu'une anomalie au niveau dudit embrayage est détectée par ce moyen de détection d'anomalie (102),
- un moyen de détection de l'état de désaccouplement de l'embrayage (105) qui détecte l'état de désaccouplement dudit embrayage (3) commandé par ledit moyen de désaccouplement de l'embrayage (104),
- un moyen d'élaboration d'un ordre de génération d'une force de retenue (106A) qui élabore un ordre de génération d'une force de retenue pour empêcher le recul dudit véhicule lorsqu'il est détecté que ledit embrayage (3) est désaccouple par ledit moyen de détection de l'état de désaccouplement de l'embrayage (105), et
- un moyen de génération d'une force de retenue qui génère la force de retenue pour empêcher le recul dudit véhicule en réponse à l'ordre en provenance dudit moyen d'élaboration d'un ordre de génération d'une force de retenue (106A),
**caractérisé en ce que**
ladite transmission (2) est une transmission du type mécanique et ledit moyen de génération d'une force de retenue est un moyen de transmission de couple monté entre l'arbre d'entrée (42) et l'arbre de sortie (44) de ladite transmission mécanique, dans lequel le moyen de transmission de couple est un embrayage de secours (60).

2. Dispositif de commande de véhicule équipé d'un embrayage automatique selon la revendication 1, **caractérisé en ce que** ledit embrayage de secours est un embrayage dans l'huile à plateaux multiples (60).

3. Dispositif de commande de véhicule équipé d'un embrayage automatique selon la revendication 1, **caractérisé en ce que** lorsque la température dudit embrayage (3) excède la première température prédéterminée, le moyen de détection d'anomalie (102) détecte le caractère anormal de la température dudit embrayage (3).

4. Procédé de commande de véhicule équipé d'un embrayage automatique, qui met automatiquement en oeuvre une force de mise en prise d'accouplement de l'embrayage (3) qui commande l'énergie d'entraînement transmise depuis un moteur thermique (1) à une transmission (2) par un dispositif d'actionnement (5), comprenant les étapes consistant à :
désaccoupler ledit l'embrayage (3) lorsqu'une anomalie au niveau dudit embrayage (3) est détectée,
élaborer un ordre de génération d'une force de retenue par un moyen d'élaboration d'un ordre de génération d'une force de retenue (106A) pour générer une force de retenue pour empêcher le recul dudit véhicule lorsqu'il est détecté que ledit embrayage (3) est désaccouplé, et générer la force de retenue pour empêcher le recul dudit véhicule en réponse à l'ordre en provenance dudit moyen d'élaboration d'un ordre de génération d'une force de retenue (106A) ;
**caractérisé par**
la mise en prise d'accouplement d'un embrayage de secours (60) monté entre l'arbre d'entrée (42) et l'arbre de sortie (44) d'une transmission du type mécanique, pour générer la force de retenue à une valeur correspondant à la force sous l'action de laquelle le véhicule est en passe de reculer.

5. Véhicule comprenant un moteur thermique (1), une transmission (2) et un embrayage automatique, au moyen duquel la force de mise en prise d'accouplement de l'embrayage (3) est automatiquement utilisable et qui commande l'énergie d'entraînement transmise depuis le moteur thermique (1) à la transmission (2) par un dispositif d'actionnement (5), **caractérisé en ce qu'**il est équipé d'un dispositif de commande selon au moins une des revendications 1 à 4.
